# EUROPEAN PATENT APPLICATION

(11) **EP 4 614 669 A1**
(43) Date of publication of application: **10.09.2025**
(21) Application number: 24840006.1
(22) Date of filing: 05.07.2024
(51) Int. Cl.: H01M 10/48, H01M 10/42, H01M 50/502, H01M 50/105, H01M 50/211

(54) **BATTERY MODULE AND BATTERY PACK INCLUDING SAME**

(30) Priority: 11.07.2023 KR 20230090046
(71) Applicant: LG Energy Solution, Ltd., Seoul 07335 (KR)
(72) Inventor: CHOI, Inseop, Daejeon 34122 (KR)
(74) Representative: Plasseraud IP
(86) International application number: PCT/KR2024/009566
(87) International publication number: WO 2025/014194

(57) **Abstract**

A battery module according to an embodiment of the present disclosure includes a battery cell stack in which a plurality of battery cells are stacked along one direction; and at least one busbar frame located on one side or both sides of the battery cell stack. The busbar frame includes a thermistor bridge that extends toward at least one of the battery cells, and a thermistor for measuring the temperature of the battery cells is fixed to the thermistor bridge. The thermistor bridge has a structure capable of moving along the one direction in which the battery cells are stacked.

## Description

### [TECHNICAL FIELD]

### Cross Citation with Related Application(s)

This application claims the benefit of Korean Patent Application No. 10-2023-0090046 filed on July 11, 2023 in the Korean Intellectual Property Office, the disclosure of which is incorporated herein by reference in its entirety.

The present disclosure relates to a battery module and a battery pack including the same, and more particularly, to a battery module that enables accurate temperature measurement of battery cells, and a battery pack including the same.

### [BACKGROUND]

In modern society, as portable devices such as a mobile phone, a notebook computer, a camcorder and a digital camera have been daily used, technologies of a field related to the mobile devices has been actively developed. In addition, as a secondary battery capable of being charged and discharged is used as a power source for an electric vehicle(EV), a hybrid electric vehicle(HEV), a plug-in hybrid electric vehicle(P-HEV) and the like as a method for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

In the case of a secondary battery used for small-sized devices, two to three battery cells are arranged, but in the case of a secondary battery used for a medium- or large-sized device such as automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a battery management system(BMS), a battery disconnect unit(BDU), and a cooling system to form a battery pack.

Meanwhile, when overvoltage, overcurrent or overheat occurs at the battery cells included in the battery module, safety and operating efficiency of the battery module are considerably deteriorated. As an example, when the pressure or temperature of the battery increases, the decomposition reaction of the active material and multiple side reactions occur, so that the temperature of the battery suddenly rises, which in turn accelerates the reaction between the electrolyte and the electrode. Eventually, a thermal runaway phenomenon occurs in which the temperature of the battery suddenly rises, and if the temperature rises above a certain level, the battery may ignite, and the battery cell and the battery module including the same may explode due to the increase in pressure inside the battery.

Therefore, a means for detecting temperature changes in the battery cells is required, whereby a temperature sensor such as a thermistor is disposed in the battery module to check and control the operating status in real time or at regular intervals. That is, the thermistor is an important component for sensing the temperature of the battery cells included in the battery module and adjusting the operating conditions of the cooling system of the battery pack and the temperature load of each battery cell, and must exist at an accurate sensing position of the battery cells.

However, during the process of repeatedly charging and discharging the battery cells or the initial charging process, a phenomenon in which the internal electrolyte thereof may be decomposed, thereby generating gas and causing the battery cells 110 to swell, i.e., a swelling or breathing phenomenon, may occur. In a battery module containing a large number of such battery cells, each battery cell is located differently from its initial position at the time of swelling the battery cells. In particular, since the battery cells swell in the thickness direction, the positions of the battery cells may change along the direction in which the battery cells are stacked.

As described above, the thermistor must be located at the accurate sensing position of the battery cells, but due to swelling of the battery cells, the thermistor may be located at a position different from the initial design, which may cause problems in measuring the accurate temperature information of the battery cell.

Therefore, taking into consideration the swelling phenomenon of the battery cells, etc., a means is required to keep so that the thermistor can continue to exist at accurate sensing position.

### [DETAILED DESCRIPTION OF THE INVENTION]

### [Technical Problem]

It is an object of the present disclosure to provide a battery module capable of collecting accurate temperature information by having a thermistor continuously existed at an accurate sensing position, and a battery pack including the same.

However, the technical object of the present disclosure is not limited to the aforementioned one, and may be extended in various ways within the scope of the technical idea included in the present disclosure.

### [Technical Solution]

A battery module according to an embodiment of the present disclosure comprises a battery cell stack in which a plurality of battery cells are stacked along one direction; and at least one busbar frame located on one side or both sides of the battery cell stack. The busbar frame includes a thermistor bridge that extends toward at least one of the battery cells, and a thermistor for measuring the temperature of the battery cells is fixed to the thermistor bridge. The thermistor bridge has a structure capable of moving along the one direction in which the battery cells are stacked.

The thermistor bridge may include a fixing part that is fixed to at least one of the battery cells.

The fixing part may be hook-coupled and fixed to at least one of the battery cells.

When the battery cells swell, the thermistor bridge may move along the one direction in which the battery cells are stacked as the thickness of the battery cells increases.

The battery cell may be a pouch-type battery including an electrode assembly and a pouch case that houses the electrode assembly, and the pouch case may have a sealing part formed by sealing the outer periphery of the portion where the electrode assembly is housed.

The fixing part may be hook-coupled and fixed to the sealing part.

The fixing part may be fixed to at least one of the battery cells by an adhesive member.

A sensing assembly may be mounted on the busbar frame, and the sensing assembly may include a connection circuit member that transmits information about the battery cells.

The connection circuit member may include an extension part extending in the direction where the thermistor bridge is located. The thermistor may be fixed to the thermistor bridge while being connected to the extension part.

The connection circuit member may be a flexible printed circuit board(FPCB) or a flexible flat cable(FFC).

The busbar frame may include at least one hinge part, and the thermistor bridge may include a hinge rod coupled to at least one of the hinge parts. The fixing blocks formed at both ends of the hinge rod are located so as to be separated more outward than at least one of the hinge parts, so that the thermistor bridge may have a structure capable of moving along the one direction.

The thermistor bridge may include at least one hinge part, and the busbar frame may include a hinge rod coupled to at least one of the hinge parts. The fixing blocks formed at both ends of the hinge rod are located so as to be separated more outward than at least one of the hinge parts, so that the thermistor bridge may have a structure capable of moving along the one direction.

A battery pack according to another embodiment of the present disclosure comprises the battery module.

### [Advantageous Effects]

According to embodiments of the present disclosure, a thermistor bridge to which a thermistor is fixed has a structure capable of moving along a direction in which the battery cells in the battery module are stacked, so that the thermistor can continuously exist at accurate sensing position and can accurately collect the temperature of the battery cells.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

FIG. 1 is a perspective view of a battery module according to an embodiment of the present disclosure.
FIG. 2 is an exploded perspective view of the battery module of FIG. 1.
FIG. 3 is an enlarged partial perspective view of a battery cell stack and a busbar frame included in the battery module of FIG. 1.
FIG. 4 is a plan view showing one of the battery cells included in the battery cell stack of FIG. 3.
FIG. 5 is an enlarged partial view of a section "A" of FIG. 3.
FIG. 6 is a partial view showing a thermistor bridge, a thermistor, and a connection circuit member according to an embodiment of the present disclosure.
FIGS. 7 and 8 are partial views showing a thermistor bridge, a thermistor, and a connection circuit member according to an embodiment of the present disclosure as viewed at different angles.
FIG. 9 is a partial view for explaining a coupling structure of a thermistor bridge according to an embodiment of the present disclosure.
FIG. 10 is a cross-sectional view showing a part of a cross section cut along the cutting line B-B' of FIG. 6.
FIG. 11 is a cross-sectional view according to another embodiment of the present disclosure.
FIG. 12 is a partial view according to a modified embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

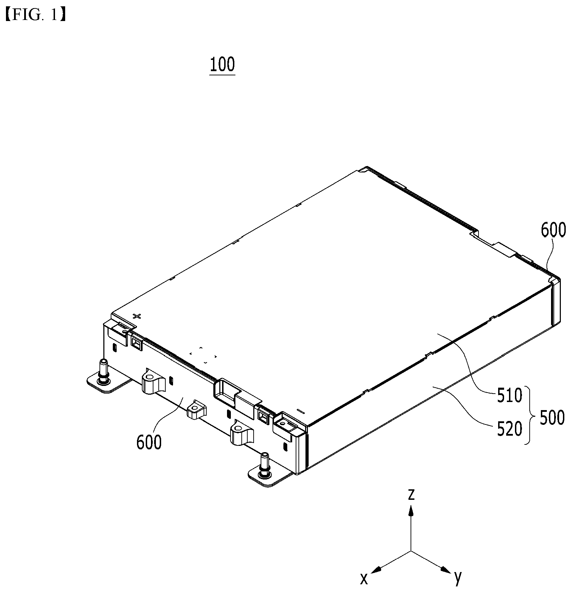

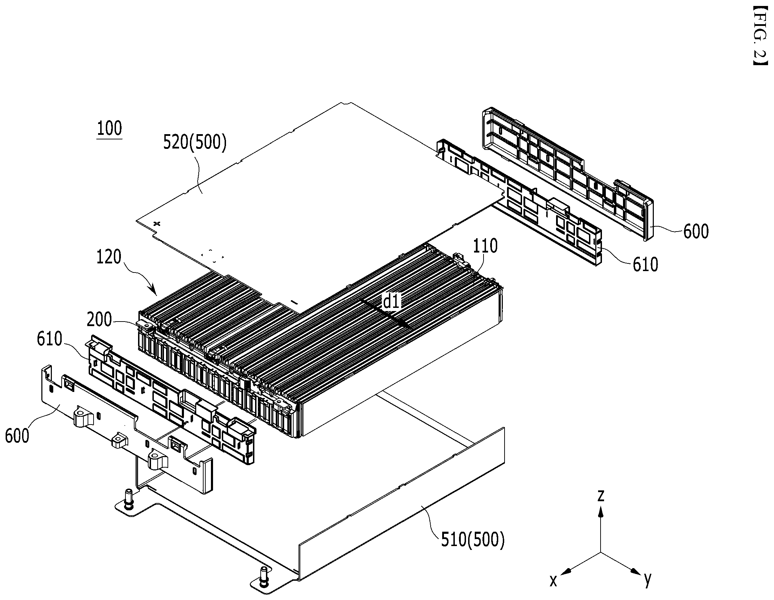

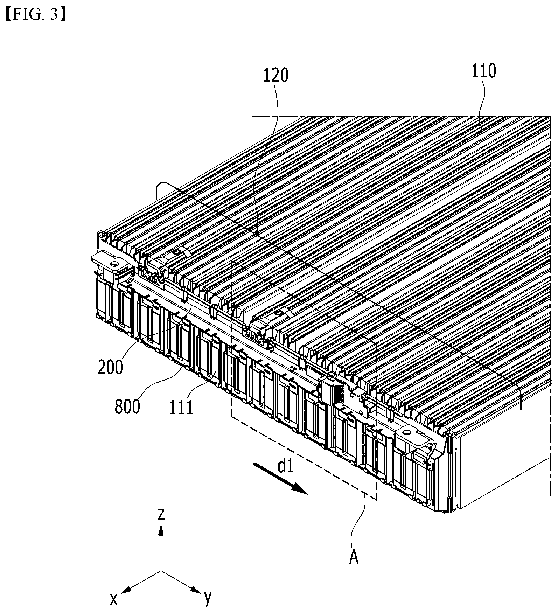

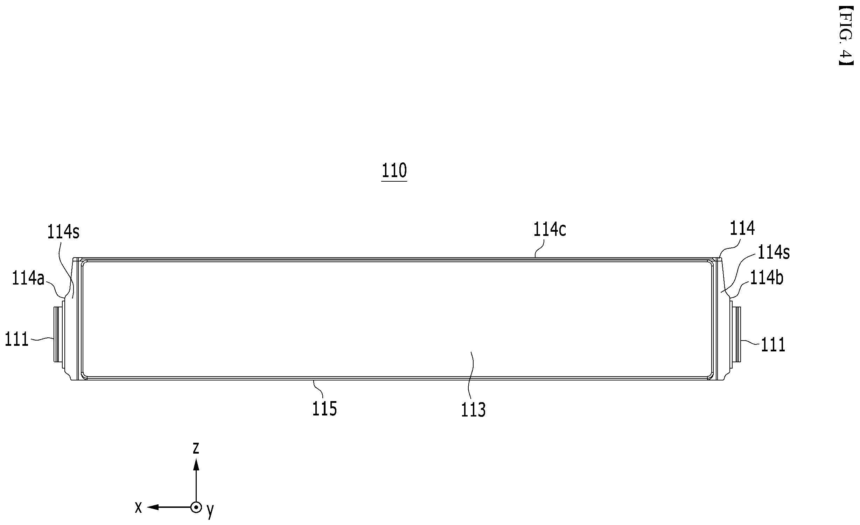

FIG. 1 is a perspective view of a battery module according to an embodiment of the present disclosure. FIG. 2 is an exploded perspective view of the battery module of FIG. 1. FIG. 3 is an enlarged partial perspective view of a battery cell stack and a busbar frame included in the battery module of FIG. 1. FIG. 4 is a plan view showing one of the battery cells included in the battery cell stack of FIG. 3.

Referring to FIGS. 1 to 4, a battery module 100 according to an embodiment of the present disclosure includes: a battery cell stack 120 in which a plurality of battery cells 110 are stacked; and at least one busbar frame 200 located on one side or both sides of the battery cell stack 120.

A battery cell 110 according to the present embodiment may be a pouch-type battery in which an electrode assembly having electrode leads 111 protruding in one direction or in both directions is housed in a pouch case 114. However, this is only one exemplary embodiment, and the battery cell according to another embodiment of the present disclosure may be a prismatic battery.

For convenience of explanation, a battery cell 110 which is a pouch-type battery will be mainly described below.

The battery cell 110 may be formed in a rectangular sheet-like structure. The battery cell 110 may be formed by housing an electrode assembly in a pouch case 114 made of a laminate sheet including a resin layer and a metal layer, and then adhering the outer peripheral part of the pouch case 114. As an example, the battery cell 110 may have a structure in which two electrode leads 111 face each other and protrude from one end 114a and the other end 114b of the cell main body 113. As another example, a structure in which all the electrode leads 111 of the battery cells 110 protrude in one direction is also possible. One of the electrode leads 111 is a positive electrode lead, and the other one is a negative electrode lead.

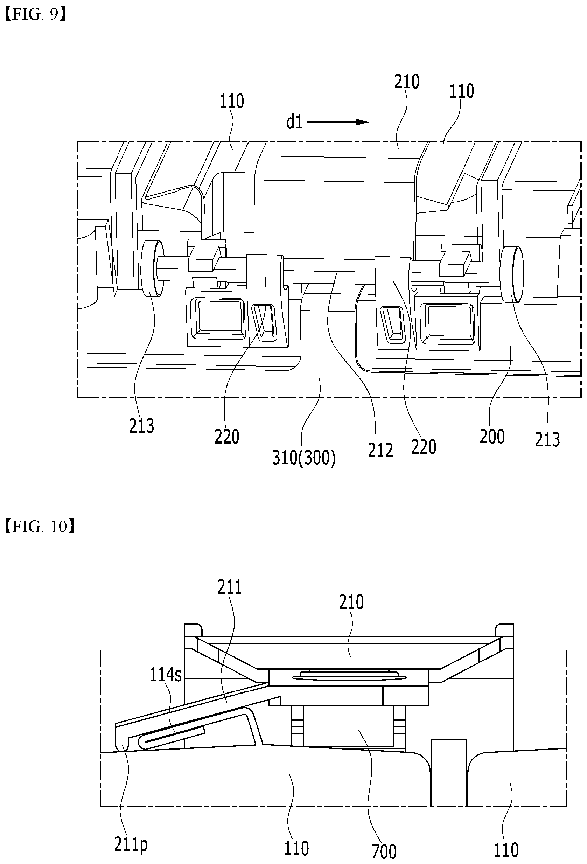

The battery cell 110 can be produced by joining both end parts 114a and 114b of a pouch case 114 and one side part 114c connecting them in a state in which an electrode assembly (not shown) is housed in a pouch case 114. In other words, the battery cell 110 according to an embodiment of the present disclosure has a total of three sealing parts 114s, wherein the sealing parts 114s have a structure that is sealed by a method such as fusion, and the remaining other one side part may be composed of a folding part 115. That is, the battery cell 110 according to the present embodiment may have a structure in which the electrode assembly is housed inside the pouch case 114, wherein the pouch case 114 has a sealing part 114s formed by sealing the outer peripheral part of the portion where the electrode assembly is housed. In FIG. 4, only a state in which the sealing parts 114s are formed at both end parts 114a and 114b of the pouch case 114 are illustrated, and the sealing part is not illustrated on the upper side facing the folding part 115, i.e., at one side part 114c, however, the sealing part of one side part 114c may be in a state being folded to one side after sealing is completed for space utilization. The sealing part of one side part 114c in a folded state will be described again together with FIG. 10.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can have electrical insulation properties in order to protect the electrode assembly from the outside. Such an outer resin layer may include a polyethylene terephthalate(PET) resin or a nylon resin. The metal layer can prevent air, moisture, and the like from flowing into the pouch-type secondary battery. This metal layer may include aluminum(Al). The inner resin layers may be heat-sealed to each other by heat and/or pressure applied in a state in which the electrode assembly is embedded. This inner resin layer may include casted polypropylene(CPP) or polypropylene(PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be joined to each other to provide a sealing part 114s. The pouch case is sealed in this manner, so that the battery cell 110, which is a pouch-type secondary battery, can be produced.

The battery cells 110 may be formed in plural numbers, and the plurality of battery cells 110 may be stacked along one direction so as to be electrically connected to each other, thereby forming a battery cell stack 120. In particular, as shown in FIGS. 2 and 3, a plurality of battery cells 110 may be stacked in an upright state along one direction d1 parallel to the y-axis so as to make one side surfaces of the cell main body 113 face each other. Thereby, the electrode leads 111 may protrude in a direction perpendicular to the direction in which the battery cells 110 are stacked. That is, in the battery cell 110, one electrode lead 111 may protrude toward the x-axis direction, and the other electrode lead 111 may protrude toward the -x-axis direction. If the battery cells have electrode leads 111 protruding in only one direction, the electrode leads 111 protrude in the x-axis direction or the -x-axis direction.

Meanwhile, the battery module 100 according to the present embodiment may include a module frame 500 and an end plate 600 that form an internal space in which the battery cell stack 120 is housed.

The module frame 500 may be a structure in which one surface and the other surface opposite to the one surface are opened. More specifically, the module frame 500 may be opened in both directions in which the electrode leads 111 protrude with respect to the battery cell stack 120.

The module frame 500 according to an embodiment of the present disclosure may include a U-shaped frame 510 that covers the lower surface and both side surfaces of the battery cell stack 120 and an upper cover 520 that covers the open upper surface of the U-shaped frame 510. The U-shaped frame 510 and the upper cover 520 may be joined to each other at corresponding edges.

Further, in another embodiment of the present disclosure, the module frame may be in the form of a mono frame integrated with the upper surface, the lower surface, and both side surfaces.

The end plate 600 is formed in plural numbers, and can cover each of the open both sides of the module frame 500. The battery cell stack 120 is housed in the internal space formed by the module frame 500 and the end plate 600, thereby capable of physically protecting ethe battery cell stack 120. For this purpose, the module frame 500 and the end plate 600 can include a metal material having a predetermined strength. Meanwhile, the module frame 500 and the end plate 600 can be joined by welding while their corresponding corner portions are in contact with each other.

In addition, an electrically insulating insulation cover 610 can be disposed between the battery cell stack 120 and the end plate 600. This insulation cover 610 can prevent a short circuit from occurring within the battery module 100 while covering the busbar frame 200.

Next, the configuration of the busbar frame, thermistor bridge, thermistor, and the like according to the present embodiment will be described in detail.

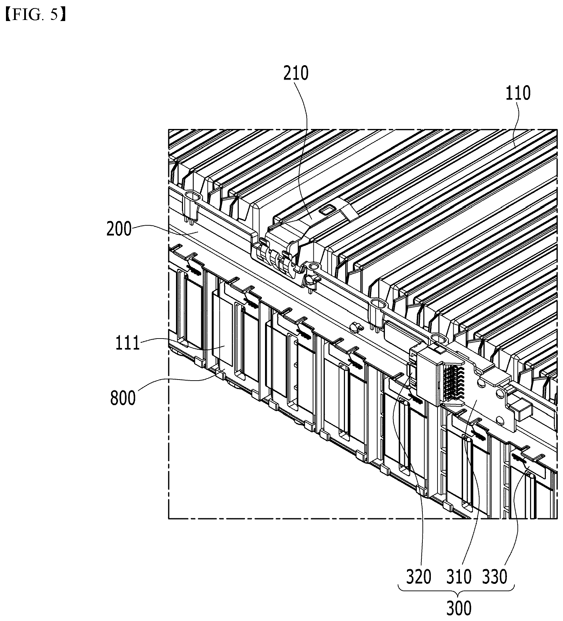

FIG. 5 is an enlarged partial view of a section "A" of FIG. 3.

Referring to FIGS. 2, 3 and 5, the battery module 100 according to the present embodiment includes at least one busbar frame 200 located on one side or both sides of the battery cell stack 120 as described above. As an example, two busbar frames 200 may be located on both sides of the battery cell stack 120, and as another example, one busbar frame 200 may be located on one side of the battery cell stack 120. The busbar frame 200 may be located between the battery cell stack 120 and the insulating cover 610, and may include an electrically insulating material.

The busbar frame 200 may be equipped with a busbar 800 for electrical connection between battery cells 110 and a sensing assembly 300 for sensing voltage and temperature of battery cells 110. Specifically, the busbar 800 and the sensing assembly 300 can be mounted on the opposite surface of the busbar frame 200 that faces the battery cell stack 120.

The busbar 800 is for electrically connecting the battery cells 110 inside the battery module 100, and preferably includes a metal material so as to enable electrical connection. Electrode leads 111 extending from the battery cells 110 may be bent after passing through a slit formed in the busbar frame 200 and connected to the busbar 800. As an example, one electrode lead 111 may be bent after passing through a slit of a busbar frame 200 located on one side of the battery cell stack 120 and connected to the busbar, and the other electrode lead 111 can pass through a slit of the other busbar frame 200 located on the other side of the battery cell stack 120 and then be connected to the other busbar 800. The connection method between the electrode lead 111 and the busbar is not particularly limited, and as an example, weld-joining may be performed. As the electrode leads 111 of the battery cells 110 are connected to the busbar in this way, the battery cells 110 may be electrically connected to each other via the busbar. In this manner, a HV (High Voltage) connection may be performed within the battery module 100. Meanwhile, the sensing assembly 300 will be described below.

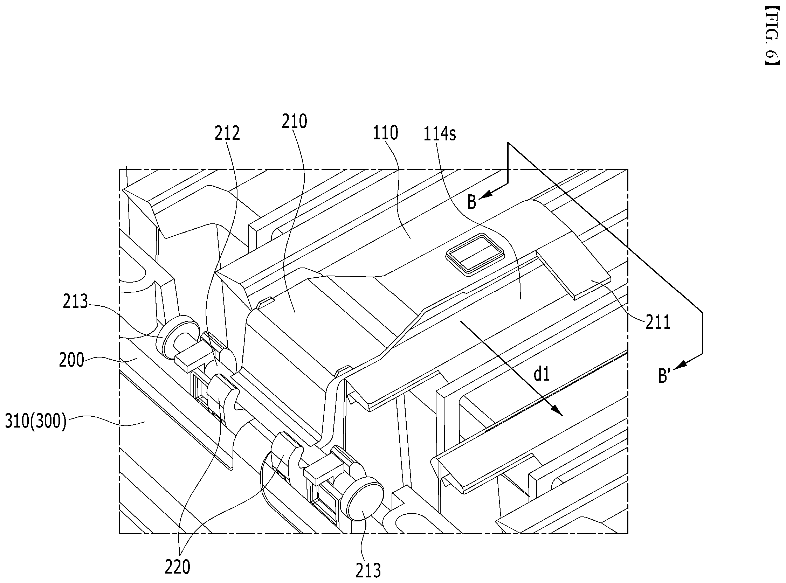

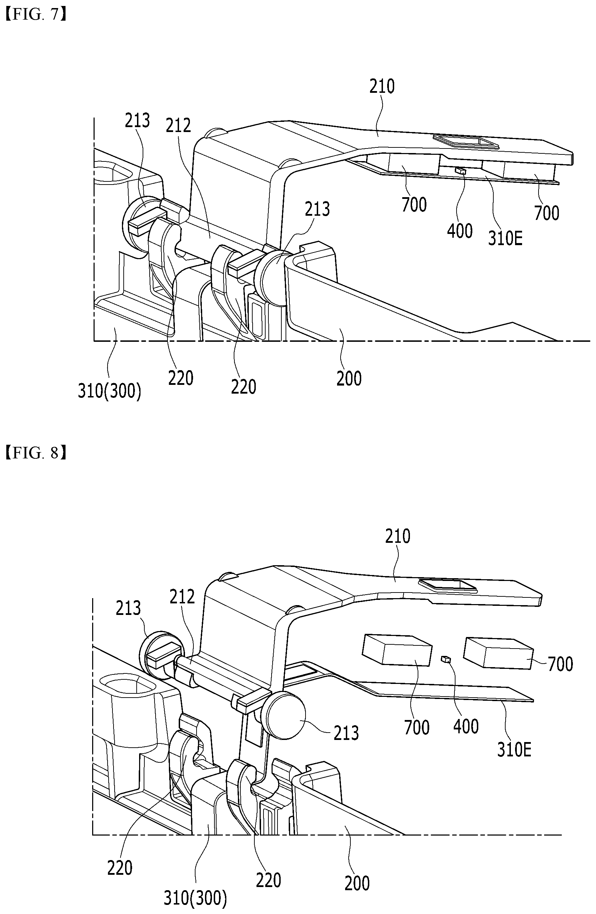

FIG. 6 is a partial view showing a thermistor bridge, a thermistor, and a connection circuit member according to an embodiment of the present disclosure. FIGS. 7 and 8 are partial views showing a thermistor bridge, a thermistor, and a connection circuit member according to an embodiment of the present disclosure as viewed at different angles. However, in FIGS. 7 and 8, the fixing part 211 in the thermistor bridge 210 is not illustrated for convenience of explanation. The fixing part 211 will be described with reference to FIGS. 6 and 10.

Referring to FIGS. 5 to 8 together, the busbar frame 200 includes a thermistor bridge 210 that extends toward at least one of the battery cells 110. A thermistor 400 for measuring the temperature of the battery cell 110 is fixed to the thermistor bridge 210, wherein the thermistor bridge 210 has a structure capable of moving along the one direction d1 in which the battery cells 110 are stacked. The thermistor 400 can sense temperature data of the battery cells 110, and transmit the sensed temperature data to a battery management system(BMS) located outside the battery module 100.

During the process of repeatedly charging and discharging the battery cells 110 or the initial charging process, a phenomenon in which the internal electrolyte thereof may be decomposed, thereby generating gas and causing the battery cells to swell, i.e., a swelling phenomenon, may occur.

When swelling occurs in battery cells 110 stacked along one direction d1, the battery cells 110 mainly swell along their thickness direction, and the positions of the battery cells 110 may change along the direction d1 in which the battery cells 110 are stacked. When the battery cells swell, the thermistor 400 fixed to the thermistor bridge 210 may exist at a position other than the designated position of the battery cells 110, and the accuracy of temperature measurement of the battery cells 110 via the thermistor 400 is decreased.

The thermistor bridge 210 according to the present embodiment has a structure capable of moving along the one direction d1 in which the battery cells 110 are stacked, and therefore, even if the positions of the battery cells 110 change more than in conventional cases due to swelling of the battery cells 110, the thermistor bridge 210 and thermistor 400 can continue to exist at accurate sensing position. Therefore, the temperature of the battery cells 110 can be collected more accurately. More specifically, when the battery cells 110 swell, the thermistor bridge 210 can move along the one direction d1 in which the battery cells 110 are stacked as the thickness of the battery cells 110 increases.

Next, the movable structure of the thermistor bridge 210 according to an embodiment of the present disclosure will be described. However, this is an exemplary structure, and if the thermistor bridge 210 has a structure capable of moving along the one direction d1 in which the battery cells 110 are stacked as the thickness of the battery cells 110 increases, it can be applied to another embodiment of the present disclosure.

FIG. 9 is a partial view for explaining a coupling structure of a thermistor bridge according to an embodiment of the present disclosure. FIG. 10 is a cross-sectional view showing a part of a cross section cut along the cutting line B-B' of FIG. 6.

Referring to FIGS. 6 to 10 together, the thermistor bridge 210 may include a fixing part 211 that is fixed to at least one of the battery cells 110. As an example, the fixing part 211 may be hook-coupled and fixed to at least one of the battery cells 110. As described above, in FIGS. 7 and 8, the fixing part 211 in the thermistor bridge 210 is not illustrated in order to explain the configuration of the thermistor 400, and the like.

The fixing part 211 may include a protrusion part 211p formed into a protrusive shape. While the protrusion part 211p is hook-coupled to a stepped shape formed in the battery cells 110, the fixing part 211 may be fixed to at least one of the battery cells 110. The stepped shape formed in the battery cells 110 is not particularly limited, and as an example, the protrusion part 211p of the fixing part 211 can be hook-coupled to the stepped structure formed by the sealing part 114s of the pouch case 114. As described above, the battery cell 110 according to the present embodiment can be a pouch-type battery including an electrode assembly and a pouch case 114 that houses the electrode assembly, wherein the pouch case 114 can have a sealing part 114s formed by sealing the outer periphery of the portion where the electrode assembly is housed. Referring to FIGS. 4 and 10 together, the sealing part 114s formed on the upper side, i.e., one side part 114c, of the pouch case 114 can be folded to one side after sealing is completed. The fixing part 211 according to the present embodiment can be hook-coupled and fixed to the sealing part 114s. In other words, the protrusion part 211p of the fixing part 211 can be hook-coupled to the stepped structure formed by the sealing part 114s folded on one side part 114c of the pouch case 114. However, the fixing of the fixing part 211 to the battery cell 110 by the hook-coupling of the protrusion part 211p is one exemplary embodiment of the present disclosure, and if the fixing part 211 is fixed to the battery cell 110, the method thereof is not particularly limited.

The busbar frame 200 according to an embodiment of the present disclosure may include at least one hinge part 220, and the thermistor bridge 210 may include a hinge rod 212. The hinge rod 212 of the thermistor bridge 210 may be coupled to at least one hinge part 220. The hinge rod 212 may be located so as to extend along the one direction d1 in which the battery cells 110 are stacked. The fixing blocks 213 formed at both ends of the hinge rod 212 may be located so as to be separated more outward than at least one hinge part 220, so that the thermistor bridge 210 may have a structure capable of moving along the one direction d1.

Taken together, the thermistor bridge 210 can be fixed to at least one of the battery cells 110 via the fixing part 211, and can move along the one direction d1, which is the expansion direction of the battery cells 110. In this embodiment, the movable structure of the thermistor bridge 210 can be implemented through the fixing block 213 that is located so as to be separated more outward than the hinge part 220. Due to the fixing structure and the movable structure of the thermistor bridge 210, the thermistor bridge 210 moves by the amount of thickness increase in the swelling of the battery cells 110, so that the thermistor 400 fixed to the thermistor bridge 210 can continue to exist at an accurate sensing position. However, as described above, the fixed structure via the fixing part 211 and the movable structure via the hinge part 220 and the hinge rod 212 are exemplary structures, and can be applied to other embodiments of the present invention if the fixing function and the movable function are satisfied.

Meanwhile, the thermistor 400 may be fixed to the thermistor bridge 210 while being connected to the connection circuit member 310 included in the sensing assembly 300. Next, the structure of the sensing assembly 300 and the like will be described in detail.

Referring to FIGS. 5 to 8, a sensing assembly 300 may be mounted on a busbar frame 200 according to the present embodiment. The sensing assembly 300 is a member for LV (Low Voltage) connection of the battery module 100. The LV connection refers to an electrical connection that requires a relatively low voltage, such as a battery electrical component. The sensing assembly 300 senses temperature data or voltage data of battery cells 110 included in the battery module 100, and transmits the sensed voltage or temperature data to a battery management system(BMS) located outside the battery module 100. The battery management system may control the operation of the corresponding battery module 100 based on the transmitted voltage or temperature data.

The sensing assembly 300 may include a connection circuit member 310 that transmits information about the battery cell 110. The connection circuit member 310 included in the sensing assembly 300 may be a flexible printed circuit board(FPCB) or a flexible flat cable(FFC). This connection circuit member 310 may transmit temperature data of the battery cells 110 inside the battery module 100 or voltage data of each battery cell 110 to the external battery management system.

The connection circuit member 310 may include an extension part 3 10E extending in the direction where the thermistor bridge 210 is located. The thermistor 400 may be fixed to the thermistor bridge 210 while being connected to this extension part 310E. As an example, at least one pad 700 may be disposed on the extension part 310E, one surface of the pad 700 may be joined to the extension part 310E, and the other surface of the pad 700 may be joined to the thermistor bridge 210. Through this structure, the extension part 310E and thermistor 400 may be fixed to the thermistor bridge 210 and moved together according to the movement of the thermistor bridge 210.

Meanwhile, the sensing assembly 300 may further include a module connector 320 and a joining member 330 in addition to the connection circuit member 310. The module connector 320 is a member that is connected to the connection circuit member 310 and exposed to the outside of the battery module 100. A module connector opening is formed in the end plate 600, and the module connector 320 can be exposed to the outside of the battery module 100 through the module connector opening.

A joining member 330 can be connected to the connection circuit member 310. This joining member 330 can be connected to the electrode lead 111 or the busbar 800. The method by which the joining member 330 is connected to the electrode lead 111 or the busbar 800 is not particularly limited, but weld-joining can be applied so as to enable physical and electrical connection. The voltage data of each battery cell 110 is transmitted to the module connector 320 via the joining member 330 and the connection circuit member 310.

The module connector 320 is connected to the battery management system located outside the battery module 100, and can transmit the temperature data of the battery cells 110 measured by the thermistor 400 and the voltage data of each battery cell 110 transmitted via the joining member 330 to the battery management system. The battery management system can monitor the status of each battery cell 110 based thereon and control the operation of the battery module 100 based thereon.

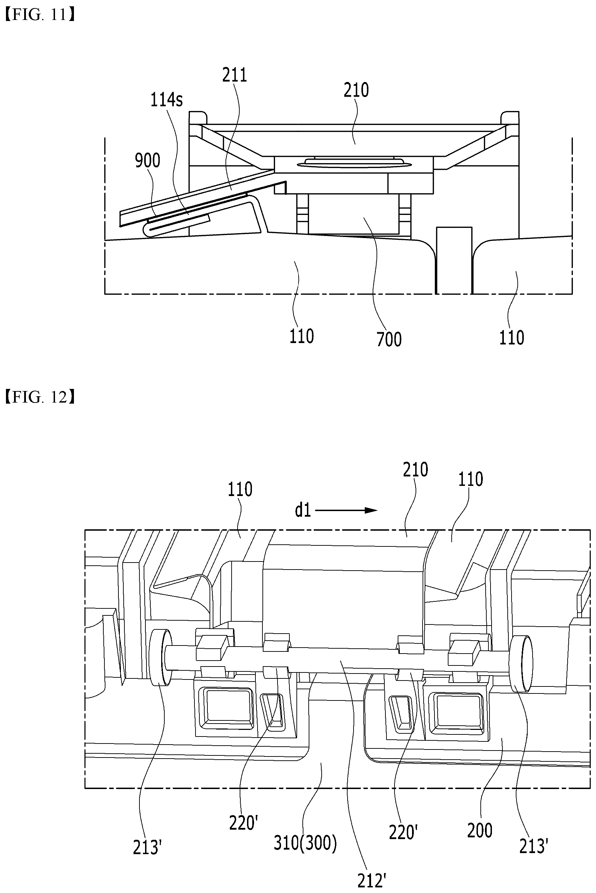

FIG. 11 is a cross-sectional view according to another embodiment of the present disclosure, and specifically corresponds to a cross-sectional view at the same position as in FIG. 10.

Referring to FIG. 11, the fixing part 211 of the thermistor bridge 210 according to another embodiment of the present disclosure may be fixed to the battery cell 110 by an adhesive member 900. The adhesive member 900 may be an adhesive or an adhesive tape. In the present disclosure, if the fixing part 211 is fixed to the battery cell 110 as described above, the method thereof is not particularly limited. Consequently, a fixing method of fixing the fixing part 211 to the battery cell 110 using an adhesive member 900 as in FIG. 11 can also be applied.

FIG. 12 is a partial view according to a modified embodiment of the present disclosure, and specifically corresponds to a diagram viewed from the same position as in FIG. 9.

Referring to FIG. 12, the thermistor bridge 210 according to a modified embodiment of the present disclosure may include at least one hinge part 220', and the busbar frame 200 may include a hinge rod 212'. The hinge rod 212' of the busbar frame 200 may be coupled to at least one hinge part 220'. The hinge rod 212' may be a configuration integrated with the busbar frame 200, and the hinge part 220' may be a configuration integrated with the thermistor bridge 210. Here, the integrated configuration means that both configurations are not attached via another configuration, but are injection-molded together and integrated.

In addition, the fixing blocks 213' formed at both ends of the hinge rod 212' are located so as to be separated more outward than at least one hinge part 220', so that the thermistor bridge 210 can have a structure capable of moving along the one direction d1.

That is, FIG. 12 corresponds to a modified embodiment in which the positions of the hinge part and the hinge rod in FIG. 9 are reversed. As described above, if the thermistor bridge 210 has a structure capable of moving along the one direction d1 in which the battery cells 110 are stacked, it can be applied to a modified embodiment of the present disclosure.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS(Energy Storage System), and can be applied to various devices capable of using a secondary battery, without being limited thereto.

Although the invention has been shown and described in detail with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Symbols]

100: battery module
110: battery cell
120: battery cell stack
200: busbar frame
210: thermistor bridge
300: sensing assembly
310: connection circuit member
400: thermistor

## Claims

1. A battery module comprising:
a battery cell stack in which a plurality of battery cells are stacked along one direction; and
at least one busbar frame located on one side or both sides of the battery cell stack,
wherein the busbar frame includes a thermistor bridge that extends toward at least one of the battery cells,
wherein a thermistor for measuring the temperature of the battery cells is fixed to the thermistor bridge, and
wherein the thermistor bridge has a structure capable of moving along the one direction in which the battery cells are stacked.

2. The battery module according to claim 1, wherein:
the thermistor bridge includes a fixing part that is fixed to at least one of the battery cells.

3. The battery module according to claim 2, wherein:
the fixing part is hook-coupled and fixed to at least one of the battery cells.

4. The battery module according to claim 2, wherein:
when the battery cells swell, the thermistor bridge moves along the one direction in which the battery cells are stacked as the thickness of the battery cells increases.

5. The battery module according to claim 2, wherein:
the battery cell is a pouch-type battery including an electrode assembly and a pouch case that houses the electrode assembly, and
the pouch case has a sealing part formed by sealing the outer periphery of the portion where the electrode assembly is housed.

6. The battery module according to claim 5, wherein:
the fixing part is hook-coupled and fixed to the sealing part.

7. The battery module according to claim 2, wherein:
the fixing part is fixed to at least one of the battery cells by an adhesive member.

8. The battery module according to claim 1, wherein:
a sensing assembly is mounted on the busbar frame, and
the sensing assembly includes a connection circuit member that transmits information about the battery cells.

9. The battery module according to claim 8, wherein:
the connection circuit member includes an extension part extending in the direction where the thermistor bridge is located, and
the thermistor is fixed to the thermistor bridge while being connected to the extension part.

10. The battery module according to claim 8, wherein:
the connection circuit member is a flexible printed circuit board(FPCB) or a flexible flat cable(FFC).

11. The battery module according to claim 1, wherein:
the busbar frame includes at least one hinge part,
the thermistor bridge includes a hinge rod coupled to at least one of the hinge parts, and
the fixing blocks formed at both ends of the hinge rod are located so as to be separated more outward than at least one of the hinge parts, so that the thermistor bridge has a structure capable of moving along the one direction.

12. The battery module according to claim 1, wherein:
the thermistor bridge includes at least one hinge part,
the busbar frame includes a hinge rod coupled to at least one of the hinge parts, and
the fixing blocks formed at both ends of the hinge rod are located so as to be separated more outward than at least one of the hinge parts, so that the thermistor bridge has a structure capable of moving along the one direction.

13. A battery pack comprising the battery module according to claim 1.
